# EUROPÄISCHE PATENTANMELDUNG

(11) **EP 2 767 167 A2**
(43) Veröffentlichungstag der Anmeldung: **20.08.2014**
(21) Anmeldenummer: 14153739.9
(22) Anmeldetag: 04.02.2014
(51) Int. Cl.: A21C 11/10

(54) **Verfahren und Vorrichtung zum Ausstanzen von Teigstücken**

(30) Priorität: 13.02.2013 DE 102013002502
(71) Anmelder: Schäfer, Helmut, 72070 Tübingen (DE)
(72) Erfinder: Schäfer, Helmut, 72070 Tübingen (DE)
(74) Vertreter: Ott, Elmar

(57) **Zusammenfassung**

Es werden ein Verfahren und eine Vorrichtung zum Ausstanzen von Teigstücken aus einer auf einem Transportband (5) aufliegenden Teigbahn (6) vorgeschlagen. In einem ersten Verfahrensschritt wird ein Stanzwerkzeug (13) zunächst zum Ausstanzen von Teigstücken von oben aus einer Ausgangsposition nach unten bewegt, bis das Stanzwerkzeug (13) die Teigbahn (6) bis zum Transportband (5) durchdringt, dann werden in einem zweiten Verfahrensschritt die Teigstücke mittels einer Saugvorrichtung (3) von unten gegen das luftdurchlässige Transportband (5) angesaugt und dadurch in dieser Position gehalten. In einem dritten Verfahrensschritt kehrt das Stanzwerkzeug (13) in seine obere Ausgangsposition zurück und das Ansaugen der Teigstücke wird beendet.

## Beschreibung

Die Erfindung betrifft ein Verfahren zum Ausstanzen von Teigstücken gemäß dem Oberbegriff des Patentanspruchs 1 sowie eine Vorrichtung zur Durchführung des Verfahrens nach dem Patentanspruchs 8.

In handwerklichen Bäckereibetrieben wird eine Vielzahl unterschiedlicher Gebäckteile hergestellt. Hierfür werden Ausstechformen verwendet, um entsprechend geformte Teigstücke aus einer Teigbahn auszustechen. Auf diese Weise können Teigstücke ausgestanzt oder ausgestochen werden, die beispielsweise eine Herzform oder eine Osterhasenform haben können. Derart geformte Gebäckteile werden häufig saisonal hergestellt, beispielsweise Nikolaus-Gebäckteile in der vorweihnachtlichen Saison.

Auf so genannten Schneidetischen, kann eine aufgewickelte Teigbahn am Anfang des Schneidetisches eingehängt werden. Durch den Kontakt mit einem langsam laufenden Transportband wickelt sich die Teigrolle ab und liegt somit als Teigbahn auf dem Transportband auf. Zum Schneiden der Teigformen können in herkömmlicher Weise auf dem Transportband Schneidwalzen aufliegen, auf denen aus dünnem Blech die Konturen der jeweils gewünschten Formen angebracht sind. Derartige Schneidwalzen sind aufwändig herzustellen und es besteht grundsätzlich das Problem, die ausgestochenen Teigstücke aus der Schneidform auszulösen.

Grundsätzlich besteht die Möglichkeit, eine Stanzform zum Ausstanzen von Teigstücken so auszubilden, dass jedem Teigstück ein in der Stanzform angeordneter mechanischer Auswerfer zugeordnet ist, der nach dem Stanzvorgang das Teigstück aus der Form drückt. Eine derart ausgebildete Stanzvorrichtung ist aber in ihrem Aufbau sehr aufwändig.

Der Erfindung liegt die Aufgabe zugrunde, ein Verfahren zum Ausstanzen von Teigstücken aus einer auf einem Transportband aufliegenden Teigbahn anzugeben, mit dem die Teigstücke nach dem Ausstanzen und beim Abheben der Standvorrichtung auf dem Transportband gehalten werden können.

Die Lösung dieser Aufgabe erhält man mit den im Patentanspruch 1 angegebenen Merkmalen. Dabei ist vorgesehen, dass die Teigstücke zumindest unmittelbar nach dem Stanzvorgang mittels einer Saugvorrichtung von unten gegen ein luftdurchlässiges Transportband angesaugt und dadurch in dieser Position gehalten werden. In einem weiteren Verfahrensschritt wird dann das Stanzwerkzeug in seine Ausgangsposition zurückgebracht, wobei dann das Ansaugen der Teigstücke beendet werden kann, um die Teigstücke vom Transportband zur weiteren Verarbeitung möglichst leicht entnehmen zu können. Das Ansaugen der Teigstücke stellt eine einfach realisierbare Maßnahme dar, die insbesondere keine an die jeweilige Form der Teigstücke angepasste speziellen Einrichtungen benötigt. Die beim Stand der Technik verwendeten Auswerfer müssen dagegen an die Form der Teigstücke bzw. an die Form der verwendeten Stanzformen angepasst sein, um ein vollständiges Auswerfen der Teigstücke zu gewährleisten.

Das Ansaugen der Teigstücke kann grundsätzlich kontinuierlich erfolgen, wenn der Weitertransport des Transportbandes nach dem Ausstanzen der Teigstücke dadurch nicht unnötig erschwert wird. Die Transportbahn kann durch entsprechende Gleitführungen oder Rollenführungen so geführt werden, dass die auf die Transportbahn von unten wirkende Saugkraft den Weitertransport des Transportbandes zumindest nicht übermäßig beeinträchtigt. Erfindungsgemäß kann aber auch vorgesehen sein, dass die Saugvorrichtung nur während beziehungsweise unmittelbar nach dem Stanzvorgang aktiviert ist, sodass beim Abheben des Stanzwerkzeugs die Teigstücke am Transportband angesaugt und dadurch sicher am Transportband festgehalten werden. Sobald das Stanzwerkzeug von den Teigstücken abgehoben worden ist, kann dann die Saugvorrichtung deaktiviert werden, sodass für den Weitertransport des Transportbandes keine störenden Saugkrafteinflüsse vorhanden sind.

Die vertikale Bewegung des Stanzwerkzeugs, welches von oben gegen die auf dem Transportband liegende Teigbahn zum Ausstanzen der Teigstücke bewegt wird, kann von Hand oder mittels eines motorischen Antriebs erfolgen.

Das Transportband, auf welchem die auszustanzende Teigbahn liegt, wird vorzugsweise mittels eines Elektroantriebs über einen wenigstens teilweise perforierten Schneidetisch transportiert, wobei der Antrieb und/oder die Saugvorrichtung durch eine Betätigung des Stanzwerkzeugs betätigt werden. Damit ergibt sich auch bei einer Handbetätigung des Stanzwerkzeugs ein halbautomatischer Betrieb, der bereits eine hohe Arbeitsgeschwindigkeit ermöglicht.

Grundsätzlich kann auch die Möglichkeit bestehen, die Transportrichtung des Transportbandes umschalten zu können, so dass ein Transport-Richtungswechsel möglich ist.

Vorzugsweise wird das Transportband und damit auch die Teigbahn in einstellbaren Transportschritten transportiert, so dass ein selbsttätiger Vorschub für die Teigbahn gewährleistet ist. Dabei können die Transportschritte durch einstellbare Antriebsabschnitte für den Antriebsmotor der Antriebsrolle vorgegeben werden. Es besteht aber auch die Möglichkeit, den exakt schrittweisen Vorschub der Teigbahn für aufeinanderfolgende Stanzvorgänge mittels Sensoren zu überwachen und zu steuern.

Der Erfindung liegt die weitere Aufgabe zugrunde eine Vorrichtung zum Ausstanzen von Teigstücken aus einer auf einer Transportband aufliegenden Teigbahn anzugeben, mit der insbesondere das Verfahren gemäß Patentanspruch 1 durchführbar ist.

Die Lösung dieser auf die Vorrichtung bezogenen Aufgabe wird mit den Merkmalen des Patentanspruchs 8 erhalten. Der hierfür verwendete Schneidetisch besitzt wenigstens im Wirkbereich der Stanzvorrichtung eine perforierte Tischplatte, die vorzugsweise aus einem Edelstahlblech besteht. Unter der Tischplatte ist eine zeitweise aktivierbare Saugvorrichtung angeordnet, die in aktivierten Zustand Luft durch die Perforierung der Tischplatte nach unten ansaugt. Wesentlich ist dabei, dass das über der Tischplatte sich erstreckende Transportband, auf dem eine auszustanzende Teigbahn aufliegt, luftdurchlässig ist, um die Teigstücke nach dem Ausstanzen durch den entstehenden Unterdruck am Transportband festhalten zu können.

Besonders vorteilhaft ist es, zwischen dem Transportband und der darunter befindlichen Tischplatte im perforierten Ansaugbereich ein Vlies oder eine andere luftdurchlässige Matte anzuordnen, die eine Strömungsverteilungsfunktion in der Weise hat, dass ein Ansaugen der auf dem Transportband aufliegenden Teigstücke auch dann gewährleistet ist, wenn die Perforierungen im Transportband und die Perforierungen in der Tischplatte nicht fluchten.

Die Tischplatte kann als Perforierung eine über die Fläche des Stanzbereichs bzw. über die Fläche des Ansaugbereichs verteilt angeordnete Vielzahl von Durchgangsbohrungen haben. Die Perforierungen können aber auch als Längsschlitze, die in Transportrichtung des Transportbandes ausgerichtet sind, ausgebildet sein.

Sind die Perforierungen als Längsschlitze oder in anderer Weise als größere Durchbrechungen ausgebildet, so kann dadurch ggf. auf die Verwendung einer zwischen Tischplatte und Transportband angeordneten luftdurchlässigen Matte verzichtet werden, da eine Vielzahl von kleineren Perforierungslöchern im Transportband dann immer in einem Wirkungsbereich der größeren Durchbrechungen in der Tischplatte liegen.

Grundsätzlich besteht natürlich auch die Möglichkeit, den Transport des Transportbandes mittels optischer oder anderer Sensoren exakt so zu steuern, dass immer sichergestellt ist, dass die Perforierungen im Transportband während des Stanz- und Ansaugvorganges mit den Perforierungen in der Tischplatte fluchten.

Weiterhin ist bevorzugt vorgesehen, dass eine elektrische Steuerung bei Betätigung der Stanzvorrichtung die Saugvorrichtung aktiviert, und bei Beendigung des Stanzvorganges wieder deaktiviert. Dadurch wird der gesamte Arbeitsablauf stark vereinfacht.

Die Erfindung wird nachfolgend anhand von in der Zeichnung dargestellten Ausführungsbeispielen näher erläutert.

Es zeigen:
Fig. 1 eine schematische Darstellung einer erfindungsgemäßen Vorrichtung zum Ausstanzen von Teigstücken,
Fig. 2 die Draufsicht auf das Transportband der Vorrichtung von Figur 1, auf dem eine Teigbahn aufliegt,
Fig. 3 die Draufsicht auf den perforierten Bereich der Tischplatte des Schneidetischs,
Fig. 4 einen Längsschnitt des Stanzbereichs eines Schneidetischs, auf dem zwischen Transportband und Tischplatte im Stanzbereich eine luftdurchlässige Matte angeordnet ist, und
Fig. 5 eine Draufsicht auf den Stanzbereich des Stanztisches von Figur 4, ohne aufliegendes Transportband und ohne Teigbahn.

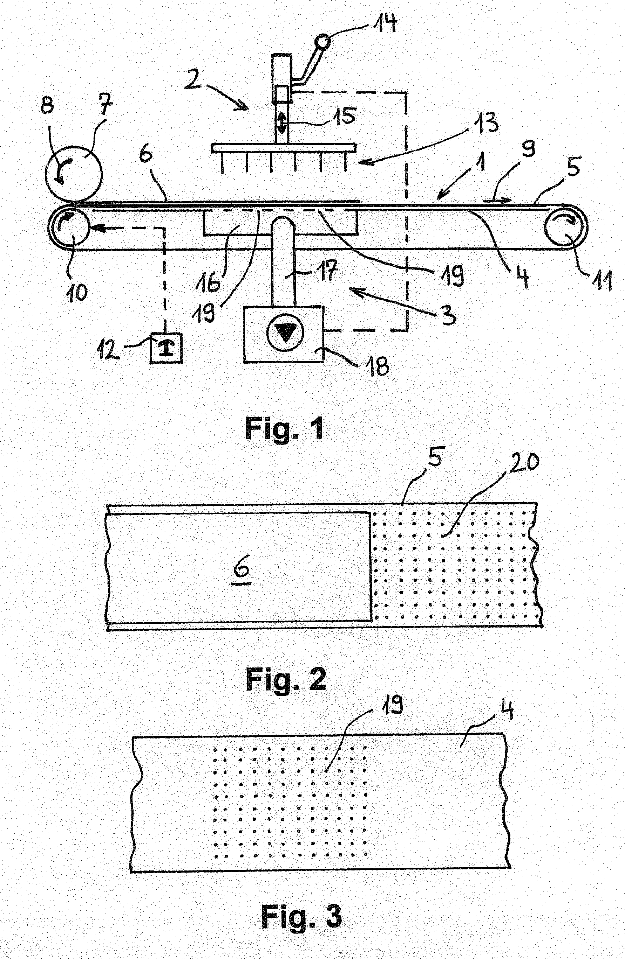

Die in Figur 1 dargestellte Vorrichtung besteht aus einem Schneidetisch 1, einer Stanzvorrichtung 2, und einer Saugvorrichtung 3. Der Schneidetisch 1 besitzt eine Tischplatte 4 aus einem Edelstahlblech auf der ein Transportband 5 aufliegt. Auf dem Transportband 5 liegt eine Teigbahn 6 auf, die von einer Teigrolle 7 mittels einer Transportbewegung des Transportbandes 5 in Pfeilrichtung 8 abgewickelt wird. Die Transportbewegung des Transportbandes 5 ist mit einem Pfeil 9 dargestellt.

Der Schneidetisch 1 besitzt zwei Umlenkrollen 10, 11, von denen beispielsweise die linke Umlenkrolle 10 als Antriebsrolle dienen kann, die von einem Rohrmotor oder einem sonstigen Elektromotor angetrieben wird. Das Ein- und Ausschalten des hier nicht näher dargestellten Antriebsmotors kann mittels eines Fußschalters 12 erfolgen.

Die Stanzvorrichtung 2 besitzt ein Stanzwerkzeug 13, welches durch Betätigung eines Handhebels 14 vertikal zum Ausstanzen von Teigstücken aus der Teigbahn 6 bewegt werden kann. Die Vertikalbewegung ist durch den Doppelpfeil 15 veranschaulicht.

Im Wirkungsbereich der Stanzvorrichtung 2 bzw. des Stanzwerkzeugs 13 befindet sich an der Unterseite der Tischplatte 4 die Saugvorrichtung 3, welche aus einem Saugkasten 16, einem Saugrohr 17 und einer Saugpumpe 18 besteht. Der Saugkasten 16 ist nach oben im Stanzbereich von der in diesem Bereich perforierten Tischplatte 4 abgeschlossen. Dies bedeutet, dass die vorgesehene Perforierung 19 in der Tischplatte 4 es ermöglicht, Luft durch die Perforierung 19 mittels der Saugvorrichtung 3 anzusaugen. Das insgesamt ebenfalls perforierte Transportband 5 ermöglicht es, dass mittels der Saugvorrichtung 3 die auf dem Transportband 5 aufliegende Teigbahn 6 im Wirkungsbereich der Stanzvorrichtung 2 am Transportband 5 angesaugt werden kann. Durch das Ansaugen der Teigbahn 6 während des Stanzvorganges wird nun erreicht, dass die mittels des Stanzwerkzeugs 13 ausgestanzten Teigstücke unmittelbar während und nach dem Ausstanzvorgang am Transportband 5 gehalten werden und somit nicht beim Hochfahren des Stanzwerkzeuges 13 in die dargestellte Position im Stanzwerkzeug 13 hängen bleiben.

In der Draufsicht von Fig. 2 ist nun die Perforierung 20 des Transportbandes 5 ersichtlich sowie die Position der aufliegenden Teigbahn 6, unmittelbar vor der Durchführung des Stanzvorganges.

Figur 3 zeigt in Draufsicht die Tischplatte 4 des Schneidetischs 1 im perforierten Ansaug- und Stanzbereich. In diesem Bereich ist die Tischplatte 4 mit einer Perforierung 19 in Form einer Vielzahl von kleinen Durchgangsbohrungen ausgestattet.

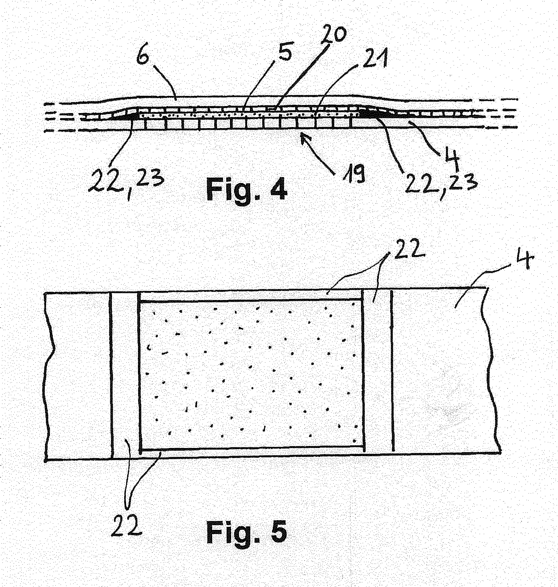

Die Schnittansicht von Figur 4 zeigt einen Ausschnitt eines Schneidetischs im Stanz- und Ansaugbereich, wo sich hier zusätzlich eine als Vlies ausgebildete luftdurchlässige Matte 21 befindet. Die Matte 21 liegt zwischen der Perforierung 19 der Tischplatte 4 und dem Transportband 5 in einem Metallrahmen 22 ein. Der Metallrahmen 22 besitzt in Transportrichtung des Transportbandes 5 ausgerichtete Anlaufschrägen 23, damit das Transportband 5 problemlos über die Matte 21 hinweggleiten kann. Die Matte 21 kann aber auch in der Tischplatte 4 einliegen, sodass dann keine Anlaufschrägen 23 erforderlich sind.

Die Matte 21 besitzt eine Luftverteilungsfunktion, so dass während des Ansaugens der Teigbahn 6 es nicht zwingend erforderlich ist, dass die Perforierungen 19 und 20 fluchten.

In der Draufsicht von Figur 5 ist der Rahmen 22 als umlaufender Rahmen ersichtlich, in welchem die Matte 21 einliegt.

## Patentansprüche

1. Verfahren zum Ausstanzen von Teigstücken aus einer auf einem Transportband (5) aufliegenden Teigbahn (6), bei dem ein Stanzwerkzeug (13) zum Ausstanzen von Teigstücken von oben aus einer Ausgangsposition nach unten bewegt wird, bis das Stanzwerkzeug (13) die Teigbahn (6) bis zum Transportband (5) durchdringt, **dadurch gekennzeichnet, dass** die ausgestanzten Teigstücke von unten gegen das Transportband (5) mit einer Saugkraft angesaugt werden, und dass dann das Stanzwerkzeug (13) von der Teigbahn (6) wieder nach oben angehoben wird, wobei die Saugkraft die ausgestanzten Teigstücke am Transportband (5) festhält.

2. Verfahren nach Anspruch 1, **dadurch gekennzeichnet, dass** das Ansaugen der Teigstücke nach dem Stanzvorgang so lange erfolgt, bis das Stanzwerkzeug von der Teigbahn abgehoben wurde.

3. Verfahren nach Anspruch 1, **dadurch gekennzeichnet, dass** die vertikale Bewegung des Stanzwerkzeugs (13) von Hand oder mittels eines motorischen Antriebs erfolgt.

4. Verfahren nach einem der vorhergehenden Ansprüche, **dadurch gekennzeichnet, dass** das Transportband (5) mittels einer elektromotorisch über einen wenigstens teilweise perforierten Schneidetisch (1) transportiert wird, wobei der Antrieb und/oder die Saugvorrichtung (3) durch eine Betätigung des Stanzwerkzeugs (13) betätigt werden.

5. Verfahren nach einem der vorhergehenden Ansprüche, **dadurch gekennzeichnet, dass** die Transportrichtung des Transportbandes (5) umkehrbar ist.

6. Verfahren nach einem der vorhergehenden Ansprüche, **dadurch gekennzeichnet, dass** das Transportband (5) die Teigbahn (6) in einstellbaren Transportschritten transportiert.

7. Verfahren nach Anspruch 6, **dadurch gekennzeichnet, dass** die Transportschritte durch einstellbare Antriebsabschnitte für den Antriebsmotor der Antriebsrolle vorgegeben werden oder der schrittweise Vorschub der Teigbahn (6) für aufeinanderfolgende Stanzvorgänge mittels Sensoren überwacht wird.

8. Vorrichtung zum Ausstanzen von Teigstücken aus einer auf einem Transportband (5) aufliegenden Teigbahn (6) mit einem Schneidetisch (1), auf dem das Transportband (5) verläuft, und mit einer Stanzvorrichtung (1), die ein von oben auf die Teigbahn (6) aufsetzbares Stanzwerkzeug (13) hat, insbesondere zur Durchführung des Verfahrens nach Anspruch 1, **dadurch gekennzeichnet, dass** der Schneidetisch (1) eine wenigstens im Wirkungsbereich der Stanzvorrichtung (2) perforierte Tischplatte (4) hat, dass unter der Tischplatte (4) eine zeitweise aktivierbare Saugvorrichtung (3) angebracht ist, die im aktivierten Zustand Luft durch die Perforierung (19) der Tischplatte (4) ansaugt, und dass das über der Tischplatte (4) verlaufende Transportband (5) luftdurchlässig ist.

9. Vorrichtung nach Anspruch 8, **dadurch gekennzeichnet, dass** im Wirkungsbereich der Stanzvorrichtung (2) zwischen Transportband (5) und Tischplatte (4) ein Vlies oder eine andere luftdurchlässige Matte (21) angeordnet ist.

10. Vorrichtung nach einem der Ansprüche 7 bis 9, **dadurch gekennzeichnet, dass** die Tischplatte (4) als Perforierung (19) eine über die Fläche des Stanzbereichs verteilt angeordnete Vielzahl von Durchgangsbohrungen hat.

11. Vorrichtung nach einem der Ansprüche 7 bis 10, **dadurch gekennzeichnet, dass** die Perforierung (20) im Transportband (5) und in der Tischplatte (4) beim Stanzvorgang miteinander fluchten.

12. Vorrichtung nach einem der Ansprüche 7 bis 11, **dadurch gekennzeichnet, dass** die Perforierungen (19, 20) in der Tischplatte (4) einerseits und in dem Transportband (5) andererseits unterschiedlich große Durchgangsöffnungen und/oder unterschiedlich geformte Durchgangsöffnungen haben.

13. Vorrichtung nach einem der Ansprüche 7 bis 12, **dadurch gekennzeichnet, dass** in der Tischplatte (4) als Perforierungen (19) in Transportrichtung des Transportbande (5) ausgerichtete Schlitze angeordnet sind.

14. Vorrichtung nach einem der Ansprüche 7 bis 13, **dadurch gekennzeichnet, dass** eine elektrische Steuerung bei Betätigung der Stanzvorrichtung (2) die Saugvorrichtung (3) aktiviert und bei Beendigung des Stanzvorganges wieder deaktiviert.
